# EUROPEAN PATENT APPLICATION

(11) **EP 4 843 657 A1**
(43) Date of publication of application: **25.11.2026**
(21) Application number: 24918835.0
(22) Date of filing: 17.01.2024
(51) Int. Cl.: B01D 53/04

(54) **CONTROL METHOD AND MONITORING SYSTEM**

(71) Applicant: Hitachi High-Tech Corporation, Minato-ku Tokyo 105-6409 (JP)
(72) Inventor: SHIRAKAWABE, Yoshiharu, Tokyo 105-6409 (JP); YAMAZAKI, Miki, Tokyo 105-6409 (JP)
(74) Representative: MERH-IP Matias Erny Reichl Hoffmann Patentanwälte PartG mbB
(86) International application number: PCT/JP2024/001057
(87) International publication number: WO 2025/154189

(57) **Abstract**

The present invention provides a technique capable of appropriately detecting deterioration of an adsorbent provided in a carbon dioxide capture device. The control method according to the present invention calculates an adsorption rate representing carbon dioxide adsorption performance of a collection unit based on a ratio of carbon dioxide concentrations before and after gas has passed through the collection unit

## Description

### Technical Field

The invention relates to a technique for monitoring the performance of a carbon dioxide capture device that captures carbon dioxide from gas.

### Background Art

CCUS (Carbon dioxide Capture, Utilization, and Storage) is a general term for techniques for capturing and storing carbon dioxide. Examples of methods for capturing carbon dioxide include DAC (Direct Air Capture, in which carbon dioxide in air is captured by an adsorption filter or the like). When taking out carbon dioxide adsorbed on an adsorbent, parameters such as pressure and temperature are swung. For example, in a pressure swing method, by repeating pressurized adsorption and depressurized desorption, carbon dioxide is captured from air, and the captured carbon dioxide is taken out from the adsorbent.

PTL 1 below describes a technique relating to a carbon dioxide capture device. The document discloses, as a problem, "the present disclosure provides a carbon dioxide separation and recovery apparatus capable of stably recovering carbon dioxide having high purity over a long period of time," and discloses a technique in which "the carbon dioxide separation and recovery apparatus according to the present disclosure includes: a carbon dioxide separator that is provided in the middle of a carbon dioxide-containing gas supply flow path and separates carbon dioxide by a separation membrane; a decompression pump that decompresses a permeation side of the separation membrane via a first recovered-gas flow path; a plurality of adsorbers filled with an adsorbent for adsorbing carbon dioxide contained in the carbon dioxide-containing gas that has not permeated through the separation membrane, the plurality of adsorbers alternately repeating an adsorption process and a regeneration process while one of the adsorbers is performing the adsorption process and the other is performing the regeneration process; a recovery pump that decompresses the adsorbers via a second recovered-gas flow path to recover carbon dioxide from the adsorbent; and a controller that controls the capacity of the decompression pump according to the cumulative operating time of the recovery pump" (see Abstract).

### Citation List

### Patent Literature

PTL 1: JP 2022-161050 A

### Summary of Invention

### Technical Problem

In a process in which a carbon dioxide capture device captures carbon dioxide by a swing operation, an adsorbent deteriorates over time, and adsorption efficiency (adsorption rate) gradually decreases. When the adsorption rate decreases, even if the swing operation is performed, a desired amount of carbon dioxide cannot be obtained. Therefore, it is desirable to detect deterioration of the adsorbent in a timely manner. In a conventional technique such as PTL 1, how to detect deterioration of the adsorbent has not been sufficiently studied.

The invention has been made in view of the above problems, and an object thereof is to provide a technique capable of appropriately detecting deterioration of an adsorbent provided in a carbon dioxide capture device.

### Solution to Problem

A control method according to the invention calculates an adsorption rate representing carbon dioxide adsorption performance of a collection unit based on a ratio of carbon dioxide concentrations before and after gas has passed through the collection unit.

### Advantageous Effects of Invention

According to the control method according to the invention, it is possible to provide a technique capable of appropriately detecting deterioration of an adsorbent provided in a carbon dioxide capture device. Other problems, configurations, advantages, and the like of the invention will become apparent from the following description of embodiments.

### Brief Description of Drawings

[FIG. 1] FIG. 1 is a configuration diagram of a carbon dioxide capture device 1 and a monitoring system 2 according to Embodiment 1.
[FIG. 2] FIG. 2 is a graph showing temporal changes in carbon dioxide concentrations respectively detected by sensors 131 and 132.

### Description of Embodiments

### <Embodiment 1>

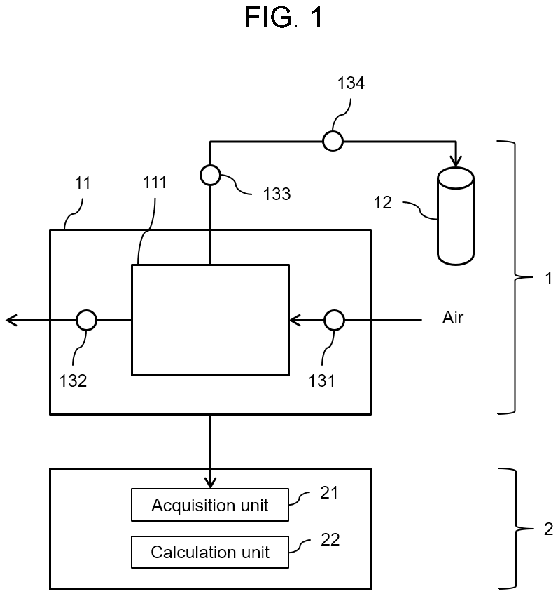

FIG. 1 is a configuration diagram of the carbon dioxide capture device 1 and the monitoring system 2 according to Embodiment 1 of the invention. The carbon dioxide capture device 1 is a device that captures carbon dioxide contained in gas (for example, atmosphere). The monitoring system 2 is a system that monitors deterioration of an adsorbent provided in the carbon dioxide capture device 1.

The carbon dioxide capture device 1 includes a recovery unit 11, a storage unit 12, and sensors 131 to 134. The recovery unit 11 captures carbon dioxide by an adsorbent provided in a collection unit 111. The carbon dioxide captured by the recovery unit 11 is sent to the storage unit 12, and the storage unit 12 stores the carbon dioxide. The sensors 131 to 134 will be described later.

The monitoring system 2 includes an acquisition unit 21 and a calculation unit 22. The acquisition unit 21 acquires values respectively detected by the sensors 131 to 134. The calculation unit 22 calculates, based on the values acquired by the acquisition unit 21, efficiency (adsorption rate) with which the adsorbent provided in the collection unit 111 adsorbs carbon dioxide. A calculation procedure will be described later.

### <Embodiment 1: Operation of Monitoring System>

The recovery unit 11 takes in gas (for example, atmosphere), and captures carbon dioxide contained in the gas by the collection unit 111. The recovery unit 11 adsorbs carbon dioxide onto the adsorbent provided in the collection unit 111 by, for example, swinging pressure, temperature, or the like, desorbs the carbon dioxide from the adsorbent, and sends the carbon dioxide to the storage unit 12. It is desirable to perform these operations efficiently and with low power consumption. However, when the adsorbent deteriorates and the adsorption rate decreases, the efficiency of carbon dioxide capture decreases, and power consumption also increases. In addition, even if the swing operation is performed, a desired amount of carbon dioxide cannot be obtained. Therefore, the monitoring system 2 monitors deterioration of the adsorbent by the following procedure.

The sensor 131 detects the concentration (first concentration) of carbon dioxide contained in the gas before the gas passes through the collection unit 111. The sensor 132 detects the concentration (second concentration) of carbon dioxide contained in the gas after the gas has passed through the collection unit 111. The acquisition unit 21 acquires these detected values. The calculation unit 22 calculates a ratio between the first concentration and the second concentration (second concentration/first concentration). This ratio corresponds to the adsorption rate.

The calculation unit 22 estimates the degree of deterioration of the adsorbent based on the calculated adsorption rate. For example, the degree of deterioration of the adsorbent can be estimated based on a difference or ratio between an initial value and a current value of the adsorption rate. Alternatively, the degree of deterioration of the adsorbent can be estimated by comparing a temporal change rate of the adsorption rate (a change rate of the adsorption rate with respect to operating time of the collection unit 111) with a threshold. The calculation unit 22 can further estimate a timing at which the adsorbent should be replaced. For example, when the degree of deterioration of the adsorbent estimated by the above procedure reaches a threshold or more, an alert recommending replacement can be issued.

Carbon dioxide adsorbed by the collection unit 111 may contain a chemical substance that is not intended to be recovered. This may cause an unintended cost increase, such as adding a step of purifying a delivered material. Therefore, the monitoring system 2 monitors the quality of the delivered material by the following procedure.

The sensor 133 detects components contained in the delivered material when carbon dioxide desorbed from the collection unit 111 is sent to the storage unit 12. For example, in addition to carbon dioxide, an impurity (e.g., NOx) typically adsorbed in an adsorption process is detected. The acquisition unit 21 acquires the detected value (delivered-material component data). The calculation unit 22 calculates a quality index of carbon dioxide contained in the delivered material based on the detected value. For example, it is conceivable to calculate, as the quality index, a ratio or difference between carbon dioxide contained in the delivered material and a substance other than the carbon dioxide. Another appropriate quality index may be used.

The sensor 134 detects the volume of carbon dioxide contained in the delivered material sent from the collection unit 111 to the storage unit 12. The acquisition unit 21 acquires the detected value, and the calculation unit 22 records the amount of carbon dioxide captured by the recovery unit 11 based on the detected value. This captured amount represents the overall capture performance of the carbon dioxide capture device 1. This captured amount and the adsorption rate can be used in combination, and this captured amount can also be used, for example, as an index of the economic effect of the carbon dioxide capture device 1.

Since the collection unit 111 adsorbs carbon dioxide in a process in which the gas passes therethrough, the ventilation performance of the collection unit 111 decreases over time. For example, dust adheres to the adsorbent and causes clogging, whereby the ventilation performance decreases. Alternatively, the ventilation performance decreases due to failure/performance deterioration of a propeller of a ventilation fan. Decrease in the ventilation performance leads to performance deterioration or failure of the collection unit 111. Therefore, the monitoring system 2 monitors the ventilation performance of the collection unit 111 by the following procedure.

The sensors 131 and 132 may detect flow rates of the gas respectively before and after the gas passes through the collection unit 111. The acquisition unit 21 may acquire the detected values, and the calculation unit 22 may estimate gas ventilation performance in the collection unit 111 based on the detected values. For example, the ventilation performance can be estimated based on a ratio or difference between the gas flow rate before passage detected by the sensor 131 and the gas flow rate after passage detected by the sensor 132. Specifically, when the flow rate after passage is significantly lower than the flow rate before passage, clogging, fan failure, or the like may have occurred in the collection unit 111. The calculation unit 22 can estimate the ventilation performance of the collection unit 111 by the above procedure. When the ventilation performance decreases, the adsorption rate of the collection unit 111 is also affected, for example, by requiring larger fan power. Therefore, monitoring the ventilation performance is useful from that viewpoint.

The adsorbent provided in the collection unit 111 may adsorb a substance other than carbon dioxide (interfering substance). This may decrease efficiency with which the adsorbent adsorbs carbon dioxide and may cause a problem such as shortening the life of the carbon dioxide capture device 1. Therefore, the monitoring system 2 estimates the possibility that the collection unit 111 has adsorbed such an interfering substance by the following procedure.

The sensor 131 detects the amount of an interfering substance (e.g., NOx) contained in the gas before the gas passes through the collection unit 111. The sensor 132 detects the amount of the same interfering substance contained in the gas after the gas has passed through the collection unit 111. The acquisition unit 21 acquires these detected values. The calculation unit 22 estimates the possibility that the collection unit 111 has adsorbed the interfering substance based on a ratio or difference between these amounts. For example, when the sensor 131 detects sulfur at 200 ppm and the sensor 132 detects sulfur at 10 ppm, there is a possibility that the collection unit 111 has adsorbed sulfur in a process in which the gas passes through the collection unit 111. On the other hand, if the difference between the two is sufficiently small, it is considered that the possibility of adsorption is small.

### <Embodiment 1: Summary>

The monitoring system 2 according to Embodiment 1 calculates the adsorption rate of the carbon dioxide adsorbent based on the ratio of carbon dioxide concentrations before and after a gas passes through the collection unit 111. This makes it possible to estimate deterioration of the collection unit 111.

The monitoring system 2 according to Embodiment 1 estimates the ventilation performance of the collection unit 111 by comparing flow rates of a gas before and after the gas passes through the collection unit 111. This makes it possible to estimate occurrence of clogging, fan failure, or the like in the collection unit 111.

The monitoring system 2 according to Embodiment 1 estimates the possibility that the adsorbent has adsorbed a substance other than carbon dioxide by comparing substances other than carbon dioxide before and after a gas passes through the collection unit 111. This makes it possible to estimate the possibility of occurrence of a problem caused by adsorption of an interfering substance by the adsorbent.

The monitoring system 2 according to Embodiment 1 calculates a quality index of carbon dioxide sent to the storage unit 12. This makes it possible to provide quality assurance in a utilization process after storage.

### <Embodiment 2>

In Embodiment 1, a configuration example for estimating the adsorption rate and the like of the collection unit 111 has been described. Embodiment 2 of the invention describes an operation example in which the timing at which the recovery unit 11 performs a swing operation is optimized. The configuration of each device is the same as that of Embodiment 1.

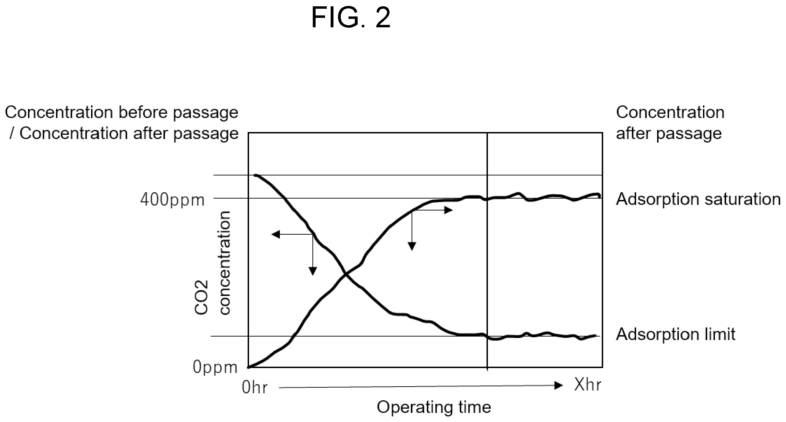

FIG. 2 is a graph showing temporal changes in carbon dioxide concentrations respectively detected by the sensors 131 and 132. The vertical axis on the right side represents the carbon dioxide concentration (second concentration) after the gas has passed through the collection unit 111. The vertical axis on the left side represents the ratio of the carbon dioxide concentration (first concentration) before passage to the carbon dioxide concentration (second concentration) after the gas has passed through the collection unit 111. The temporal change here is the operating time from when the collection unit 111 starts an operation of adsorbing carbon dioxide until desorption is performed.

Immediately after the collection unit 111 starts operation, when the gas passes through the collection unit 111, carbon dioxide is efficiently adsorbed, and therefore the second concentration is small. When the collection unit 111 continues operation, the amount of carbon dioxide that can be adsorbed by the collection unit 111 gradually becomes saturated, and when this reaches a certain level, further adsorption becomes impossible. The upward curve in FIG. 2 represents this.

Similarly, when the carbon dioxide concentrations before and after the gas passes through the collection unit 111 are compared, immediately after the start of operation, the concentration before passage is high and the concentration after passage significantly decreases, and therefore the ratio between the two (first concentration/second concentration) is large. When the collection unit 111 continues operation, the collection unit 111 gradually becomes unable to adsorb carbon dioxide, and therefore the second concentration increases, whereby the ratio between the two decreases. The downward curve in FIG. 2 represents this. The downward slope represents the adsorption rate.

If the collection unit 111 is operated until the adsorbent reaches the limit at which carbon dioxide can be adsorbed and then carbon dioxide is desorbed, the amount of carbon dioxide that can be captured by one adsorption can be maximized. On the other hand, the adsorption rate gradually decreases during the period from adsorption to desorption as shown by the downward curve in FIG. 2, and therefore adsorbing carbon dioxide up to the adsorption limit is not desirable from the viewpoint of operating efficiency. Therefore, the monitoring system 2 aims to balance the tradeoff between these.

Specifically, the calculation unit 22 acquires detected values from the sensors 131 and 132, and calculates the values of the respective vertical axes in FIG. 2 using these detected values. The calculation unit 22 optimizes the balance between the amount of carbon dioxide that can be captured by one adsorption/desorption operation and the adsorption rate. For example, using an evaluation expression having these values as parameters, desorption by the swing operation is performed at a timing at which an evaluation value is maximized.

The calculation unit 22 can further estimate the life of the adsorbent based on the slope of the downward curve in FIG. 2. Ideally, each time adsorption/desorption is performed, the adsorption rate returns to an initial value. However, in practice, as the accumulated operating time of the collection unit 111 increases, the value after the adsorption rate has returned becomes lower in performance than the initial value. Specifically, the slope of the downward curve in FIG. 2 gradually becomes gentler. The calculation unit 22 can estimate the life of the adsorbent based on temporal change in this slope. Alternatively, since the time required from the start of adsorption to reaching the adsorption limit gradually increases with deterioration of the adsorbent, the life can be similarly estimated by monitoring this time.

### <Modifications of Invention>

In the above embodiments, the calculation unit 22 may be configured by hardware such as a circuit device in which the function thereof is implemented, or may be configured by causing a calculation device such as a CPU (Central Processing Unit) to execute software in which the function thereof is implemented.

In the above embodiments, the sensors 131 to 134 have been described as measuring carbon dioxide concentration, gas flow rate, and the like, but sensors that measure other physical quantities (e.g., temperature, humidity, and the like) may be used in combination. For example, when the performance of the carbon dioxide capture device 1 changes depending on environmental temperature, the calculation unit 22 may adjust the gas flow rate based on the measured temperature. Another appropriate optimization may be performed.

### Reference Signs List

1: carbon dioxide capture device
111: collection unit
12: storage unit
131 to 134: sensors
2: monitoring system
22: calculation unit

## Claims

1. A method for controlling a monitoring system that monitors performance of a carbon dioxide capture device that captures carbon dioxide from gas,
wherein the carbon dioxide capture device includes a collection unit that adsorbs carbon dioxide contained in the gas,
wherein the monitoring system includes a calculation unit that monitors performance of the carbon dioxide capture device,
the method comprising causing the calculation unit to perform:
a step of acquiring a first concentration of carbon dioxide contained in the gas before the gas passes through the collection unit;
a step of acquiring a second concentration of carbon dioxide contained in the gas after the gas has passed through the collection unit; and
a step of calculating an adsorption rate, representing carbon dioxide adsorption performance of the collection unit, based on a ratio between the first concentration and the second concentration.

2. The control method according to claim 1, wherein the method further comprises causing the calculation unit to perform a step of estimating a degree of deterioration of the collection unit based on an amount of change in the adsorption rate while the collection unit is operating.

3. The control method according to claim 1, wherein the method further comprises causing the calculation unit to perform a step of estimating a replacement timing of the collection unit based on an amount of change in the adsorption rate while the collection unit is operating.

4. The control method according to claim 1, wherein the carbon dioxide capture device includes a storage unit that stores carbon dioxide adsorbed by the collection unit,
and wherein the method further comprises causing the calculation unit to perform:
a step of acquiring delivered-material component data representing a result of detecting a component contained in a delivered material sent from the collection unit to the storage unit; and
a step of calculating a quality index of carbon dioxide stored in the storage unit based on the delivered-material component data.

5. The control method according to claim 1, wherein the method further comprises causing the calculation unit to perform a step of estimating ventilation performance of the collection unit based on a ratio between a flow rate of the gas before the gas passes through the collection unit and a flow rate of the gas after the gas has passed through the collection unit.

6. The control method according to claim 1, wherein the method further comprises causing the calculation unit to perform a step of estimating a possibility that the collection unit has adsorbed an interfering substance that interferes with adsorption of carbon dioxide by the collection unit, by comparing a component other than carbon dioxide contained in the gas before the gas passes through the collection unit with a component other than carbon dioxide contained in the gas after the gas has passed through the collection unit.

7. The control method according to claim 1, wherein the method further comprises causing the calculation unit to perform a step of optimizing, based on the adsorption rate, a timing at which carbon dioxide is desorbed from the collection unit, thereby optimizing a tradeoff between a remaining amount of carbon dioxide that can be adsorbed by the collection unit and the adsorption rate.

8. The control method according to claim 7, wherein, in the optimizing step, the tradeoff between the remaining amount and the adsorption rate is optimized by monitoring at least one of whether the adsorption rate has decreased to a threshold or less and whether a time required for the collection unit to reach an adsorption limit has reached a threshold or more.

9. A monitoring system that monitors performance of a carbon dioxide capture device that captures carbon dioxide from gas,
wherein the carbon dioxide capture device includes a collection unit that adsorbs carbon dioxide contained in the gas,
wherein the monitoring system includes a calculation unit that monitors performance of the carbon dioxide capture device,
and wherein the calculation unit is configured to:
acquire a first concentration of carbon dioxide contained in the gas before the gas passes through the collection unit;
acquire a second concentration of carbon dioxide contained in the gas after the gas has passed through the collection unit; and
calculate an adsorption rate, representing carbon dioxide adsorption performance of the collection unit, based on a ratio between the first concentration and the second concentration.
